# EUROPEAN PATENT APPLICATION

(11) **EP 1 631 054 A1**
(43) Date of publication of application: **01.03.2006**
(21) Application number: 05107791.5
(22) Date of filing: 25.08.2005
(51) Int. Cl.: H04N 1/00, H04N 1/32

(54) **Networked scanning**

(30) Priority: 26.08.2004 US 928680
(71) Applicant: Xerox Corporation, Rochester, NY 14644 (US)
(72) Inventor: Chapin, David M., Gresham, OR 97030 (US); Prill Jr., Thomas W., Vancouver, WA 98684 (US); Hanson, Mark L., Tigard, OR 97223 (US); Edmonds, Jonathan A., Silverton, OR 97381 (US); Sheehan, Patrick K., Clackamas, OR 97015 (US); Talla, Sahajananda, Santa Clara, CA 95051 (US)
(74) Representative: Zimmer, Franz-Josef

(57) **Abstract**

A system for scanning including a scan capable device and a controller for broadcasting a scan related message in response to a user input and for identifying for the user scan destinations that responded to the scan related message.

## Description

### BACKGROUND

The subject disclosure is generally directed to using a scan capable device on a network.

Using a scanner on a network can present various challenges. Known procedures for implementing network scanning can be complex, cumbersome, and/or lacking in flexibility, for example requiring prior knowledge of the network address of a specific scanner or prior communication with a specific scanner, or requiring network services beyond those provided by the scanner and a host device, including for example e-mail services.

### BRIEF DESCRIPTION OF DRAWINGS

FIG. 1 is a schematic block diagram of an embodiment of a networked system that includes a scan capable device.

FIG. 2 is a schematic block diagram of an embodiment of a scan capable device that can be connected to a network.

FIG. 3 sets forth a schematic flow diagram of an embodiment of a procedure for scanning.

### DETAILED DESCRIPTION

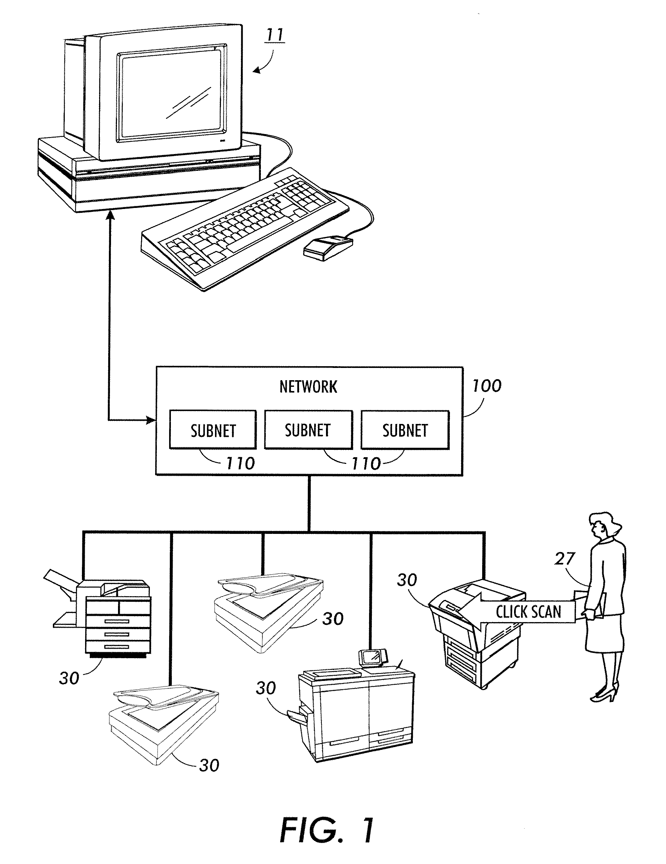

FIG. 1 is a schematic block diagram of an embodiment of a networked system that includes a network 100 that is comprised of a plurality of subnets 110, a host device 11 that is connected to one of the subnets 110, and at least one scan capable device 30 such as a scanner or multi-function device, each of which is connected to an associated subnet 110. For ease of reference, scan capable devices 30 can be referred to herein as scanners. The host device 11 can be a personal computer or a workstation that can be controlled by a user 27.

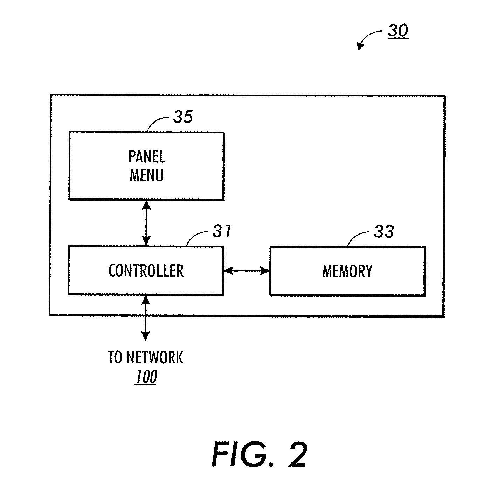

FIG. 2 is a schematic block diagram of an embodiment of a scan capable device 30 that can be connected to the network 100. The printer includes a controller 31 for controlling the operation of the scanner and a memory 33 that can comprise non-persistent memory such as random access memory (RAM) or cache, and/or persistent memory such as a hard drive or non-volatile random access memory (NVRAM). For example, the controller 31 controls the scanning operation, and stores the scanned image, for example in the memory 33. The controller 31 is also configured to be connected to the network 100 for sending and receiving network messages (e.g., communications packets). The scanner can further include a panel menu 35 for receiving inputs from a user, for example. The panel menu can include a display and a keypad, and/or a touchscreen, for example.

One or more of the scan capable devices is configured for walk-up scanning, which allows the user to walk to a walk-up scan configured scanner and initiate scanning by suitable user inputs to the panel menu of the walk-up scan configured scanner. In that regard, the controller of a walk-up scan can be configured to broadcast certain information on the network in response to user inputs to the scan capable device.

Relative to walk-up scanning a background scan monitor (BGSM) program is installed on the host device 11. The BGSM runs on the host device and listens to the network for broadcasts from a walk-up scan configured scan capable device and responds if it receives a broadcast from a walk-up scan configured scanner. The BGSM can further retrieve images produced pursuant to a walk-up scan operation.

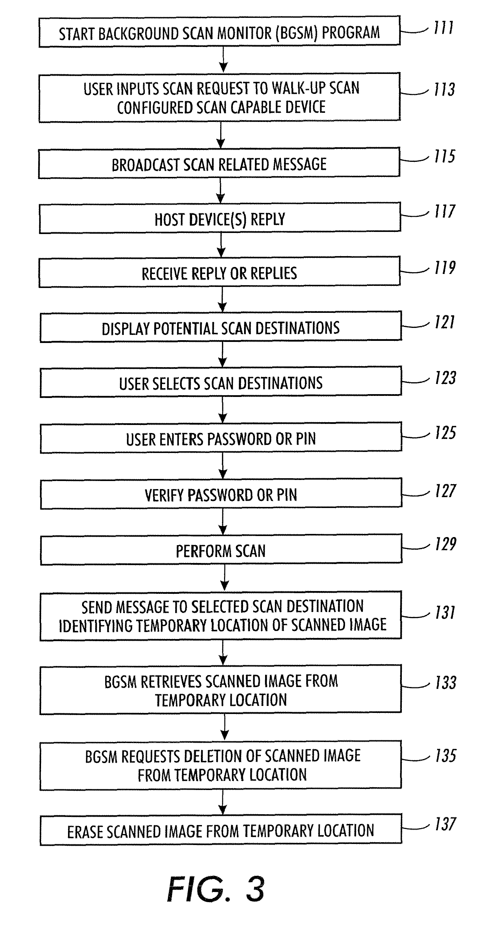

FIG. 3 sets forth a schematic flow diagram of an embodiment of a procedure for scanning using a walk-up configured scan capable device.

At 111 the BGSM program is started on the host device that is to obtain the scanned image.

At 113 the user inputs a scan request to a walk-up configured scan capable device, for example via a panel menu.

At 115 the controller of the walk-up configured scan capable device broadcasts a scan related message containing information such as the network address of the sending walk-up configured scanner, the model number of the sending walk-up configured scanner, other identifying information for the sending walk-up configured scanner and transaction information including information indicating that a scan request has been made. For example, the controller can send a scan related message to a broadcast address for a sub-network, or to respective broadcast addresses for a plurality of sub-networks. The broadcast address or addresses can be stored on the walk-up configured scanner, for example.

At 117 each host device that receives the scan related message replies. A reply can include user name, network information for the replying host device such as lP address, transaction related information, a password or PIN, and a priority level.

At 119 the controller of the walk-up configured scan capable device receives each reply.

At 121 the controller of the walk-up configured scan capable device displays a list of the host devices that replied, which can be considered as a list of potential scan destinations. The list can be based on priority level, for example.

At 123 the user selects from the list a scan destination.

At 125 the user enters a password or a PIN.

At 127 the controller of the walk-up configured scanner verifies the password or PIN.

If the password or PIN is valid for the selected scan destination, at 129 a scan process is performed.

At 131, after the scan process is initiated, the controller of the walk-up configured scan capable device sends to the selected scan destination a message containing a temporary memory location from which the scanned image can be retrieved. The temporary memory location can be located on a hard drive of the walk-up configured scanner, or some other mass storage device external to the host device.

At 133 the BGSM retrieves the scanned image.

At 135 the BGSM requests that the scanned image be deleted from the temporary memory location, for example pursuant to user input.

At 137 the controller deletes the scanned image from the temporary memory location.

As alternatives, password or PIN verification and/or priority processing can be omitted from the foregoing procedure.

## Claims

1. A system for scanning comprising:
a scan capable device;
a controller located on the scan capable device connected to a network for broadcasting a scan related message on the network in response to an input from a user and for identifying for the user scan destinations that responded to the broadcast scan destination inquiry message, and for performing a scanning function in response to user selection of one of the identified scan destinations.

2. The system of claim 1 further including a scan monitor located on a host device connected to the network for responding to the broadcast scan related message.

3. The system of claim 1 wherein the controller stores scanned images in a memory that is external to the selected scan destination.

4. The system of claim 1 wherein the controller stores scanned images in a memory that is external to the selected scan destination and wherein the controller deletes the scanned images from the memory after the selected scan destination has downloaded the scanned images.

5. The system of claim 1 wherein the controller stores scanned images in a memory that is located on the scanner.

6. The system of claim 1 wherein the controller sends the scan related message to sub-network broadcast addresses that are stored on the scanner.

7. A method of operating a scanner comprising:
sending a scan related message to at least one sub-network broadcast address in response to an input from a user;
identifying for the user scan destinations that responded to the broadcast scan related message; and
performing a scanning function in response to user selection of one of the identified scan destinations.

8. The method of claim 7 further including:
storing a resulting scanned image in a memory; and
deleting the scanned image after the selected scan destination has downloaded the scanned image.

9. The method of claim 7 further including:
storing a resulting scanned image in a memory located on the scanner; and
deleting the scanned image after the selected scan destination has downloaded the scanned image.

10. The method of claim 7 wherein sending a scan related message to at least one sub-network broadcast address comprises sending a scan related message to at least one sub-network broadcast address in response to an input from a user, wherein the at least one sub-network broadcast address is stored on the scanner.
